(19) Europäisches Patentamt / European Patent Office / Office européen des brevets

(11) **EP 3 016 994 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(21) Anmeldenummer: **14730938.9**

(22) Anmeldetag: **18.06.2014**

(51) Int Cl.:
**C08G 77/06** (2006.01)    **C08G 77/16** (2006.01)

(86) Internationale Anmeldenummer:
**PCT/EP2014/062873**

(87) Internationale Veröffentlichungsnummer:
**WO 2015/000706 (08.01.2015 Gazette 2015/01)**

(54) **VERFAHREN ZUR HERSTELLUNG VON SILICIUM-OH-FUNKTIONELLEN POLYSILOXANEN**

METHOD FOR PRODUCING SILICON-OH-FUNCTIONAL POLYSILOXANES

PROCÉDÉ DE PRODUCTION DE POLYSILOXANES À GROUPE FONCTIONNEL SILICIUM-OH

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2013 DE 102013212980**

(43) Veröffentlichungstag der Anmeldung:
**11.05.2016 Patentblatt 2016/19**

(73) Patentinhaber: **Wacker Chemie AG**
**81737 München (DE)**

(72) Erfinder:
• **LÖSSEL, Georg**
**84547 Emmerting (DE)**
• **MEISENBERGER, Manfred**
**84489 Burghausen (DE)**
• **WEWERS, Wolfgang**
**84489 Burghausen (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**DE-A1- 19 800 023**

**Beschreibung**

Die Erfindung betrifft ein Verfahren für die kontinuierliche Herstellung von SiOH-funktionellen Polysiloxanen.

US3668180A beschreibt die Herstellung von Polysiloxanen mittels eines mehrstufigen Verfahrens unter Verwendung eines Gemisches bestehend aus Halogensilanen, einem organischen Lösemittel, Wasser und Alkohol.

DE102005003899A1 beschreibt die Herstellung von Polysiloxanen durch die Reaktion von Halogensilane mit Wasser und Alkohol in Anwesenheit des gewünschten Polysiloxans.

US5223636 beschreibt die Herstellung von teilweise alkoxylierten Polysiloxanen unter Verwendung einer Vorlage bestehend aus einem Alkoxysilan, zu der kontinuierlich Halogensilane, Wasser und Alkohol zugegeben werden, dergestalt dass die Alkoxysilan enthaltende Vorlage immer auf Siedetemperatur gehalten wird.

In allen diesen Fällen handelt es sich um sehr aufwändige mehrstufige Verfahren, bei denen entweder nur Halogensilane mit Alkohol in Anwesenheit von Wasser und unpolaren und polaren Lösemittel, oder Alkoxysilane mit katalytischen Säuremengen oder gegebenenfalls mit 0,5-20 Gew.% Chlorsilane bezogen auf die Einsatzmenge an Alkoxysilanen in Anwesenheit von Wasser und Lösemittel zu Polysiloxanen umgesetzt werden, wobei nach der Reaktion die lösemittelhaltige Produktphase von der die HCl enthaltende Wasserphase abgetrennt wird.

US3489782 lehrt, dass die Herstellung von SiOH- funktionellen Polysiloxanen möglich ist, indem in einem ersten Schritt Chlorsilane oder Mischungen aus Chlorsilanen und Alkoxysilanen mit polaren Lösemitteln gemischt werden und diese Mischung und Wasser in entsprechender Menge in einem zweiten Schritt kontinuierlich einem Reaktor zugeführt wird. In dem Masse der zugeführten Eduktmengen werden aus dem Reaktor die das Polykondensat enthaltene Phase abgeführt. DE954198 beschreibt demgegenüber ein kontinuierliches Loopverfahren in dem ausschliesslich Chlorsilane oder Mischungen aus Chlorsilane gleichzeitig mit Wasser und polaren Lösemitteln zu Polysiliconölen oder in der Wasserphase nicht mehr löslichen Gelen z.B. hochkondensierte Methylpolysiliconharze umgesetzt werden, wobei immer auf vollständige Hydrolyse der Chlorsilane verwiesen wird.

Generell lässt sich folgern dass Chlorsilanhydrolysen im Batchverfahren ausgeführt, neben nicht polaren Lösemitteln und Alkoholen noch zusätzlich polare Verbindungen die als sogenannte Phasenvermittler zwischen der Wasserphase und dem die Chlorsilane enthaltenden wasserunlöslichen Lösemittelphase fungieren, benötigen. Die Aufgabe solcher Phasenvermittler ist es, die Hydrolyse/Kondensationsreaktion der in der Lösemittelphase gelösten Chlorsilane mit der Wasserphase zu unterstützen.

Typischerweise sind solche Phasenvermittler z.B. in US3489782, neben z.B. Aceton auch unter den Carbonsäureestern zu finden wie z.B. Essigsäureethylester. Solche Ester sind natürlich in der HCl-sauren Reaktionsphase anteilig gelöst und spalten dadurch entsprechende Mengen an Alkohol ab.

Überwiegend Alkoxysilan basierende kontinuierliche und oder diskontinuierliche Herstellverfahren generieren zwangsläufig die entsprechenden Alkohole in der Wasserphase.

Der in der HCl-sauren Reaktionsphase befindliche Alkohol kann sich mit HCl zu Alkanchlorid umsetzen welches wiederum zu hohen Umweltbelastungen des durch das Herstellverfahren bedingten Abwassers führt. Diese Abwasserbelastungen werden als CSB-Gehalt in ppm (CSB= chemischer Sauerstoffbedarf) und als POX-Gehalt in ppm gemessen und stehen für die im Abwasser gemessene Konzentration an Alkohol (CSB) und Alkanchlorid (POX).

Zudem haben Abwässer mit höheren Konzentrationen an Alkohol niedrige Flammpunkte. Wird Alkohol schon zu Beginn zugesetzt, so wird aufgrund längerer Reaktionszeit mit HCl der POX-Gehalt deutlich höher.

Diese Umstände zusammengenommen führen zu sehr aufwändigen und kostenintensiven Behandlungen des durch den Herstellprozess anfallenden Abwassers.

In der DE 19800023 A1 ist ein kontinuierliches Verfahren zur Herstellung von Polysiloxanen mit einem niedrigen SiOH-Gehalt beschrieben, bei dem Alkoxysilane in unpolarem Lösungsmittel durch Zusatz von Salzsäure und gegebenenfalls einer kleinen Menge an Chlorsilanen ohne polares Lösemittel umgesetzt werden.

Gegenstand der Erfindung ist ein kontinuierliches Verfahren zur Herstellung von Organopolysiloxanen mit einem OH-Gehalt von 3,0 - 10,0 Gew.-%,

bei dem Chlorsilane, Alkoxysilane, Wasser und unpolares nicht mehr als 1 g in 1 l Wasser bei 20°C und 1 bar lösliches Lösemittel kontinuierlich zum Reaktionsgemisch zudosiert werden und Reaktionsgemisch kontinuierlich abgeführt wird, bei dem die Chlorsilane in einem Gewichtsanteil von 95 % bis 60% und die Alkoxysilane in einem Gewichtsanteil von 5 % bis 40% bezogen auf die Summe aus Chlorsilanen und Alkoxysilanen parallel zudosiert werden und bei dem keine polaren Lösemittel zudosiert werden.

Die Organopolysiloxane mit einem OH-Gehalt von 3,0 - 10,0 Gew.-% werden bei dem Verfahren auf einfache und kostengünstige Weise hergestellt. Es findet eine Hydrolyse-Kondensationsreaktion statt.

Im Gegensatz zu den bekannten Verfahren können die Organopolysiloxane mit einem OH-Gehalt von 3,0 - 10,0 Gew.-%, durch das erfindungsgemäße Verfahren auch unter Verzicht wasserlöslicher polarer Lösemittel einschließlich Alkohole mit sehr kurzen Verweilzeiten hergestellt werden. Durch die niedrigen Verweilzeiten sowie geringere Mengen an Alkoxysilanen wird die Bildung von Alkanchloriden aus Alkohol und HCl unterdrückt, die Menge an Alkohol reduziert. Dies führt auch zu entscheidenden Kostenvorteilen gegenüber den bekannten kontinuierlichen und diskontinuierlichen Verfahren, da neben der größeren Durchsatzleistung durch geringe Verweilzeiten gleichzeitig der Aufwand der Abwasserbehandlung durch geringere Belastungen an CSB und POX deutlich reduziert werden kann. Ebenso weisen die Abwässer höhere Flammpunkte von über 55°C auf.

Vorzugsweise werden die Chlorsilane, Alkoxysilane, Wasser und das unpolare Lösemittel kontinuierlich in einen Loopreaktor zum Reaktionsgemisch zudosiert und das Reaktionsgemisch aus dem Loopreaktor kontinuierlich abgeführt.

Vorzugsweise werden die Chlorsilane in einem Gewichtanteil von 80 % bis 50% und die Alkoxysilane in einem Gewichtsanteil von 20% bis 50% bezogen auf die Summe aus Chlorsilanen und Alkoxysilanen zudosiert.

Es bilden sich eine Wasserphase und eine Lösemittelphase aus; diese werden innig vermischt. Vorzugsweise wird Wasser in solchen Mengen zudosiert, dass sich eine HCl-Konzentration in der Wasserphase von 5 - 35 Gew.-% einstellt.

Das unpolare Lösemittel ist vorzugsweise zu nicht mehr als 0,5 g in 1 l Wasser bei 20°C und 1 bar löslich. Beispiele für unpolare Lösemittel sind Kohlenwasserstoffe, wie Pentan, n-Hexan, Hexan-Isomerengemische, Heptan, Oktan, Waschbenzin, Petrolether, Benzol, Toluol, Xylole. Besonders bevorzugt sind Toluol und Xylole.

Polare Lösemittel, die nicht zudosiert werden, sind insbesondere Alkohole, wie Methanol und Ethanol: Ether, wie Dioxan, Tetrahydrofuran, Diethylether, Di-isopropylether, Diethylenglycoldimethylether; Ketone, wie Aceton, Methylethylketon, Di-isopropylketon, Methyl-isobutylketon (MIBK); Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Vorzugsweise wird das unpolare Lösemittel dem Reaktionsgemisch in solchen Mengen zugeführt, dass sich Festgehalte von 30-45 Gew.-% einstellen. Der Festgehalt ist die Menge an gebildeten Organopolysiloxanen, die in der Lösemittelphase gelöst sind.

Vorzugsweise wird das in der Lösemittelphase gelöste Organopolysiloxan kontinuierlich von der Wasserphase getrennt. Vorzugsweise wird das Organopolysiloxan destillativ vom Lösemittel befreit.

Chlorsilane, Alkoxysilane, Wasser und das unpolare Lösemittel werden vorzugsweise so zum Reaktionsgemisch zudosiert und Reaktionsgemisch so kontinuierlich abgeführt, daß sich sehr kurze Verweilzeiten von 1 Minute bis 30 Minuten, vorzugsweise 2 Minuten bis 15 Minuten einstellen.

Vorzugsweise weisen die Organopolysiloxane mit einem OH-Gehalt von 3,0 - 10,0 Gew.-% die allgemeine Formel I

$$R_nSiO_{4-n} \qquad (I),$$

auf, in der

**R**    OH, $C_1$-$C_{18}$-Kohlenwasserstoffrest oder $C_1$-$C_6$-Alkoxyrest und

**n**    die Werte 0, 1, 2 oder 3 bedeuten und

**n**    durchschnittliche Werte von 1,0 bis 2,0 aufweist.

Der OH-Gehalt der Organopolysiloxane bezieht sich auf die direkt an Siliciumatome angebundenen OH-Gruppen. Er beträgt vorzugsweise 3,0 - 8,0 Gew.-%.

Vorzugsweise weist **n** die durchschnittlichen Werte von 1,4 bis 1, 8 auf.

Vorzugsweise weisen die Organopolysiloxane mit einem OH-Gehalt von 3,0 - 10,0 Gew.-% ein mittleres Molekulargewicht $M_w$ von 1000 bis 3500, insbesondere von 1500 bis 3000 auf. Vorzugsweise weisen die Organopolysiloxane eine Tg (Glasübergangstemperatur) von 30°C bis 80°C insbesondere von 35°C bis 75°C auf.

Vorzugsweise weisen die Halogensilane die allgemeine Formel II

$$R^1_mSiCl_{4-m} \qquad (II),$$

auf, in der

**R$^1$**    $C_1$-$C_{18}$-Kohlenwasserstoffrest und

**m**    die Werte 0, 1, 2 oder 3 bedeuten.

Vorzugsweise weisen die Alkoxysilane die allgemeine Formel III

$$R^2_oSiR^3_{4-o} \qquad (II),$$

auf, in der

**R²**   $C_1$-$C_{18}$-Kohlenwasserstoffrest,

**R³**   $C_1$-$C_6$-Alkoxyrest und

**o**   die Werte 0, 1, 2 oder 3 bedeuten.

Die $C_1$-$C_{18}$-Kohlenwasserstoffreste **R, R¹** und **R²** sind vorzugsweise $C_1$-$C_6$-Alkoxyreste, insbesondere Methyl-, Ethyl- oder Propylreste oder Phenylreste.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Siliconmischung ergeben 100 Gew.-%.

Der OH-Gehalt der Organopolysiloxane wird nach Zerewittinoff bestimmt.

Der Flammpunkt wird nach ISO 3679 bestimmt.

Die HCl-Konzentration in der Abwasserphase wird durch direkte Titration bestimmt.

Der CSB in ppm wird mit den CSB-Küvettentests LCK 514, LCK 414 oder LCK 314 der Firma Dr. Lange photometrisch in Anlehnung an die DIN ISO 15705 bestimmt: "Wasserbeschaffenheit - Bestimmung des chemischen Sauerstoffbedarfs (ST-CSB) - Küvettentest".

Die POX-Konzentrationen wird in Anlehnung an die "DIN 38409 Teil H25"bestimmt: "Bestimmung der ausblasbaren, organisch gebundenen Halogene (POX)".

```
Die Verweilzeit min = 60 min/ (Summe aller

Eduktströme/h/Volumen Reaktionsloop)
```

```
Der Festgehalt an Organopolysiloxanen, angegeben in Gew.-% =

kgHarz / (kg Harz + kg Lösemittel) x 100
```

Die Tg (Glasübergangstemperatur) wird nach DSC 0..110R5 bestimmt.

0,0-110,0°C; 5,00°C/min

Die Probe wird im gelochten Al-Tiegel vermessen.

Das mittlere Molekulargewicht $M_w$ wird wie folgt bestimmt:

Eluent: THF

Säulen: 10e4 + 500 +100

Säulentemperatur: 45°C

Flussrate: 1,00ml/min

Druck: 75,9 bar

Detector: RI-Detector

Kalibrierung: konventionell (Polystyrol-Standards)

Polynomial 3

04_10e4+500+100_261011

Korrektur mit internem Standard

Injektvolumen: 100 $\mu$l

Probenkonzentration: 3,00 mg/ml

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

Beispiele

Beispiele 1 - 5 werden nach dem erfindungsgemäßen Verfahren in einem 30 Liter Loop (Glasanlage) mit nachgeschalteter kontinuierlicher Phasentrennung hergestellt. Die so erhaltene Rohware wird destillativ vom Lösemittel befreit.

Beispiel 1:

3,84 kg/h Dimethyldichlorsilan, 50,3 kg/h Phenyltrichlorsilan und 30,72 kg/h Methyltriethoxysilan werden zusammen mit 69,12 kg/h Wasser sowie 79 kg/h Toluol parallel über eine Mischstrecke in einen Loop geführt. Folgende Prozessparameter stellen sich ein:

Festgehalt (=Organopolysiloxane in Toluol gelöst): 36-37 Gew.-% HCl-Konzentration in Wasserphase: 27-29 Gew.-%
Verweilzeit: 5-10 Minuten
Reaktionstemperatur: 60-65°C

Das vom Produkt abgetrennte Abwasser weist folgende Parameter auf:

CSB ppm: 228767
POX ppm: 0,3-2,5
Flammpunkt: 56,5°C

Das Rohprodukt wird destillativ vom Lösemittel befreit. Man erhält ein rieselfähiges Polysiliconharz mit einem SiOH-Gehalt von 3,0 - 4,5 Gew.-%, einem Molekulargewicht $M_w$ von 1800-3000 und eine Tg (Glasübergangstemperatur) von 45°C - 65°C. Beispiele 2 und 3 unterscheiden sich hinsichtlich Edukteinsatzmengen nur in der Wassermenge und in den in Tabelle 1 angegebenen Prozess-und Produktparametern:

Tabelle 1

|  | Wasser (kg/h) | HCl-Konzentration in Wasserphase (Gew.-%) | SiOH-Gehalt (Gew.-%) |
|---|---|---|---|
| Beispiel 2 | 108,3 | 18-22 | 3,5 -5,0 |
| Beispiel 3 | 150 | 10-15 | 5,0 -6,0 |

Beispiel 4:

16,3 kg/h Phenyltriethoxysilan und 32,75 kg/h Phenyltrichlorsilan werden zusammen mit 69,12 kg/h Wasser sowie 79 kg/h Toluol parallel über eine Mischstrecke in einen Loop geführt. Folgende Prozessparameter stellen sich ein:

Festgehalt (= Harz in Toluol gelöst): 30-31 Gew.-%
HCl-Konzentration in Wasserphase: 12-14 Gew.-%
Verweilzeit: 5-10 Minuten
Reaktionstemperatur: 60-65°C

Das vom Produkt abgetrennte Abwasser weist folgende Parameter auf:

CSB ppm: 150000
POX ppm: <1
Flammpunkt (ISO 3579): 67°C

Das Rohprodukt wird destillativ vom Lösemittel befreit. Man erhält ein rieselfähiges Polysiliconharz mit einem SiOH-Gehalt von 5,0 - 7,0 Gew.-%., einem Molekulargewicht $M_w$: 1800 - 3000, sowie einer Tg (Glasübergangstemperatur)von 50°C-75°C.

Beispiel 5:

27,8 kg/h Phenyltriethoxysilan, 24,5 kg/h Phenyltrichlorsilan und 20,3 kg/h Propyltrichlorsilan werden zusammen mit 73,3 kg/h Wasser sowie 68,2 kg/h Toluol parallel über eine Mischstrecke in einen Loop geführt. Folgende Prozessparameter stellen sich ein:

Festgehalt (= Harz in Toluol gelöst): 35-37 Gew.-%
HCl-Konzentration in Wasserphase: 25-26 Gew.-%
Verweilzeit: 8-14 Minuten

Reaktionstemperatur: 60-65°C

Das vom Produkt abgetrennte Abwasser weist folgende Parameter auf:

CSB ppm: 140000
POX ppm: <1
Flammpunkt (ISO 3579): 73°C

Das Rohprodukt wird destillativ vom Lösemittel befreit. Man erhält ein rieselfähiges Polysiliconharz mit einem SiOH-Gehalt von 3,0 - 5,0 Gew.-%.
Beispiele 6 -7 werden nach erfindungsgemäßem Verfahren in einem 1,55 Liter Loop (Glasanlage) mit nachgeschalteter kontinuierlicher Phasentrennung hergestellt. Die so erhaltene Rohware wird destillativ vom Lösemittel befreit.

Beispiel 6:

1,46 kg/h Phenyltriethoxysilan, 1,26 kg/h Phenyltrichlorsilan und 1,125 kg/h Propyltrichlorsilan werden zusammen mit 4,64 kg/h Wasser sowie 3,4 kg/h Toluol parallel über eine Mischstrecke in einen Loop geführt. Folgende Prozessparameter stellen sich ein:

Festgehalt (=Polysiliconharz in Toluol gelöst): 38-39 Gew.-%
HCl-Konzentration in Wasserphase: 22-23 Gew.-%
Verweilzeit: 7-8 Minuten
Reaktionstemperatur: 65-70°C
Alkoxysilan: 38 Gew.-%
Chlorsilan: 62 Gew.-%

Das vom Produkt abgetrennte Abwasser weist folgende Parameter auf:

CSB ppm: 156000
POX ppm: 2,5
Flammpunkt (ISO 3579): 73°C

Das Rohprodukt wird destillativ vom Lösemittel befreit. Man erhält ein rieselfähiges Polysiliconharz mit einem SiOH-Gehalt von 4,9 Gew.-%.

Beispiel 7 (nicht erfindungsgemäß mit zu hohem Alkoxysilananteil):

2,3 kg/h Phenyltriethoxysilan, 0,45 kg/h Phenyltrichlorsilan und 1,125 kg/h Propyltrichlorsilan werden zusammen mit 4,64 kg/h Wasser sowie 3,4 kg/h Toluol parallel über eine Mischstrecke in einen Loop geführt. Folgende Prozessparameter stellen sich ein:

Festgehalt (=Polysiliconharz in Toluol gelöst): 38-39 Gew.-%
HCl-Konzentration in Wasserphase: 16-17 Gew.-%
Verweilzeit: 8-9 Minuten
Reaktionstemperatur: 65-70°C
Alkoxysilan: 59 Gew.-%
Chlorsilan: 41 Gew.-%

Das vom Produkt abgetrennte Abwasser weist folgende Parameter auf:

CSB ppm: 118000
POX ppm: 12
Flammpunkt (ISO 3579): 7°C

Das Rohprodukt wird destillativ vom Lösemittel befreit. Man erhält ein rieselfähiges Polysiliconharz mit einem SiOH-Gehalt von 4,6 Gew.-%.
Beispiel 8 (nicht erfindungsgemäß) bezieht sich auf einen bei der WACKER CHEMIE AG typischen Batchansatz bei dem SiOHfunktionelle Polysiloxanharze durch die Hydrolyse-Kondensationsreaktion von Chlorsilanen in Anwesenheit von Wasser, Phasenvermittler (polares Lösemittel) und einem nicht polaren in Wasser unlöslichen Lösemittel hergestellt werden. Verweilzeit: mehrere Stunden.

Der gesamte Ansatz wird von der HCl-sauren Wasserphase abgetrennt, neutral gewaschen und im Anschluss destilliert. Man erhält ein rieselfähiges Polysiloxanharz mit einem SiOH-Gehalt von 3,0-5,0 Gew.-%.

Das vom Produkt abgetrennte Abwasser weist folgende Parameter auf:

CSB ppm: 120000
POX ppm: 10-25
Flammpunkt (ISO 3579): 55°C

Beispiel 9 (nicht erfindungsgemäß) bezieht sich auf einen bei der WACKER CHEMIE AG typischen Batchansatz bei dem SiOHfunktionelle Polysiloxanharze durch die Hydrolyse-Kondensationsreaktion von Alkoxysilanen in Anwesenheit von Wasser und einem nicht polaren in Wasser unlöslichen Lösemittel säurekatalysiert hergestellt werden. Verweilzeit: mehrere Stunden

Der gesamte Ansatz wird von der HCl-sauren Wasserphase abgetrennt, neutral gewaschen und im Anschluss destilliert. Man erhält ein rieselfähiges Polysiloxanharz mit einem Si0H-Gehalt von 5,0-6,0 Gew.-%.

Das vom Produkt abgetrennte Abwasser weist folgende Parameter auf:

CSB ppm: 550000
POX ppm: 13-24
Flammpunkt (ISO 3579): 23 °C

Die Beispiele 7, 8 und 9 geben den aktuellen Stand der Technik wieder und führen generell auch zu SiOH funktionellen Polysiliconharzen, allerdings mit den Nachteilen, dass die beschriebenen Verfahren kostenintensiver sind, da zusätzliche Rohstoffe (polare Lösemittel und Alkohole, mehr Alkoxysilane) sowie größere Verweilzeiten notwendig sind, wodurch die aus diesen Verfahren generierten Abwässer sehr viel stärker belastet werden (höhere CSB-Werte; höhere POX-Werte sowie niedrigere Flammpunkte) und deshalb auch mit höherem Aufwand behandelt werden müssen.

**Patentansprüche**

1. Kontinuierliches Verfahren zur Herstellung von Organopolysiloxanen mit einem OH-Gehalt von 3,0 - 10,0 Gew.-%, bei dem Chlorsilane, Alkoxysilane, Wasser und unpolares nicht mehr als 1 g in 1 l Wasser bei 20°C und 1 bar lösliches Lösemittel kontinuierlich zum Reaktionsgemisch zudosiert werden und Reaktionsgemisch kontinuierlich abgeführt wird,
bei dem die Chlorsilane in einem Gewichtsanteil von 95 % bis 60% und die Alkoxysilane in einem Gewichtsanteil von 5 % bis 40% bezogen auf die Summe aus Chlorsilanen und Alkoxysilanen parallel zudosiert werden und bei dem keine polaren Lösemittel zudosiert werden.

2. Verfahren nach Anspruch 1, bei dem die Chlorsilane, Alkoxysilane, Wasser und das unpolare Lösemittel kontinuierlich in einen Loopreaktor zum Reaktionsgemisch zudosiert werden und das Reaktionsgemisch aus dem Loopreaktor kontinuierlich abgeführt wird.

3. Verfahren nach einem der vorangehenden Ansprüche, bei dem das Wasser in solchen Mengen zudosiert wird, dass sich die HCl-Konzentration in der Wasserphase von 5 - 35 Gew.-% einstellt.

4. Verfahren nach einem der vorangehenden Ansprüche, bei dem das unpolare Lösemittel ausgewählt wird aus Kohlenwasserstoffen.

5. Verfahren nach einem der vorangehenden Ansprüche, bei dem das unpolare Lösemittel dem Reaktionsgemisch solchen Mengen zugeführt wird, dass sich Festgehalte von 30-45 Gew.-% einstellen, wobei der Festgehalt die Menge an gebildeten Organopolysiloxanen ist, die in der Lösemittelphase gelöst sind.

6. Verfahren nach einem der vorangehenden Ansprüche, bei dem das in der Lösemittelphase gelöste Organopolysiloxan kontinuierlich von der Wasserphase getrennt wird.

7. Verfahren nach einem der vorangehenden Ansprüche, bei dem die Organopolysiloxane die allgemeine Formel I

...

$$R_nSiO_{4-n} \qquad (I),$$

aufweisen, in der

R OH, $C_1$-$C_{18}$-Kohlenwasserstoffrest oder $C_1$-$C_6$-Alkoxyrest und
**n** die Werte 0, 1, 2 oder 3 bedeuten und
**n** durchschnittliche Werte von 1,0 bis 2,0 aufweist.

## Claims

1. Continuous process for producing organopolysiloxanes having an OH content of 3.0 - 10.0 wt%, which comprises continuously adding to the reaction mixture chlorosilanes, alkoxysilanes, water and nonpolar solvent having a solubility in water of not more than 1 g/l at 20°C and 1 bar and continuously discharging reaction mixture, wherein said process comprises simultaneously adding the chlorosilanes in a weight fraction of 95% to 60% and the alkoxysilanes in a weight fraction of 5% to 40% based on the sum of chlorosilanes and alkoxysilanes and wherein no polar solvents are added.

2. Process according to Claim 1, wherein the chlorosilanes, alkoxysilanes, water and the nonpolar solvent are continuously added to the reaction mixture in a loop reactor and the reaction mixture is continuously discharged from the loop reactor.

3. Process according to either of the preceding claims, wherein the water is added in amounts such that the HCl concentration in the aqueous phase of 5-35 wt% is established.

4. Process according to any of the preceding claims, wherein the nonpolar solvent is selected from hydrocarbons.

5. Process according to any of the preceding claims, wherein the nonpolar solvent is supplied to the reaction mixture in amounts such that solids contents of 30-45 wt% are established, wherein the solids content is the amount of formed organopolysiloxanes dissolved in the solvent phase.

6. Process according to any of the preceding claims, wherein the organopolysiloxane dissolved in the solvent phase is continuously separated from the aqueous phase

7. Process according to any of the preceding claims, wherein the organopolysiloxanes have the general formula I

$$R_nSiO_{4-n} \qquad (I),$$

where

**R** represents OH, $C_1$-$C_{18}$ hydrocarbon radical or $C_1$-$C_6$ alkoxy radical and
**n** takes the values 0, 1, 2 or 3 and
**n** has average values of from 1.0 to 2.0.

## Revendications

1. Procédé continu pour la préparation d'organopolysiloxanes présentant une teneur en OH de 3,0-10,0% en poids, dans lequel des chlorosilanes, des alcoxysilanes, de l'eau et un solvant non polaire soluble à pas plus de 1 g dans 1 l d'eau à 20°C et à 1 bar sont dosés en continu en un mélange réactionnel et le mélange réactionnel est évacué en continu, dans lequel les chlorosilanes sont dosés en parallèle en une proportion pondérale de 95% à 60% et les alcoxysilanes en une proportion pondérale de 5% à 40%, par rapport à la somme de chlorosilanes et d'alcoxysilanes, et dans lequel on ne dose pas de solvants polaires.

2. Procédé selon la revendication 1, dans lequel les chlorosilanes, les alcoxysilanes, l'eau et le solvant non polaire sont dosés en continu en mélange réactionnel dans un réacteur à boucle et le mélange réactionnel est évacué en continu du réacteur à boucle.

3. Procédé selon l'une quelconque des revendications précédentes, dans lequel l'eau est dosée en des quantités telles qu'il se règle une concentration en HCl dans la phase aqueuse de 5-35 % en poids.

4. Procédé selon l'une quelconque des revendications précédentes, dans lequel le solvant non polaire est choisi parmi les hydrocarbures.

5. Procédé selon l'une quelconque des revendications précédentes, dans lequel le solvant non polaire est ajouté au mélange réactionnel en des quantités telles qu'il se règle des teneurs en solides de 30-45% en poids, la teneur en solides étant la quantité d'organopolysiloxanes formés qui sont dissous dans la phase de solvant.

6. Procédé selon l'une quelconque des revendications précédentes, dans lequel l'organopolysiloxane dissous dans la phase de solvant est séparé en continu de la phase aqueuse.

7. Procédé selon l'une quelconque des revendications précédentes, dans lequel les organopolysiloxanes présentent la formule générale I

$$R_nSiO_{4-n} \qquad (I),$$

dans laquelle

R signifie OH, un radical hydrocarboné en $C_1$-$C_{18}$ ou un radical $C_1$-$C_6$-alcoxy et
n signifie les valeurs 0, 1, 2 ou 3 et
n présente en moyenne des valeurs de 1,0 à 2,0.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3668180 A
- DE 102005003899 A1
- US 5223636 A
- US 3489782 A
- DE 954198
- DE 19800023 A1